# EUROPÄISCHE PATENTSCHRIFT

(11) **EP 3 626 848 B1**
(45) Veröffentlichungstag und Bekanntmachung des Hinweises auf die Patenterteilung: **03.08.2022**
(21) Anmeldenummer: 18195323.3
(22) Anmeldetag: 19.09.2018
(51) Int. Cl.: C22C 29/08, B22F 3/10, B22F 3/24

(54) **HARTSTOFFKÖRPER**
SOLID BODY
CORPS EN MATIÈRE DURE

(43) Veröffentlichungstag der Anmeldung: 25.03.2020
(73) Patentinhaber: Ceratizit Austria Gesellschaft m.b.H., 6600 Reutte (AT)
(72) Erfinder: WEBER, Adrian, 6600 Reutte (AT); SINGER-SCHNÖLLER, Alexander, 6600 Reutte (AT)
(74) Vertreter: Ciesla, Dirk

(56) Entgegenhaltungen:
- EP-A1- 3 566 799
- WO-A1-94/02284
- WO-A1-2009/061109
- US-A1- 2017 213 116
- US-B2- 7 178 446
- US-B2- 9 678 501

## Beschreibung

Die vorliegende Erfindung betrifft einen Hartstoffkörper mit den Merkmalen des Oberbegriffs von Anspruch 1 sowie ein Verfahren zur Herstellung eines Hartstoffkörpers mit den Merkmalen des Oberbegriffs von Anspruch 9.

Aus dem Stand der Technik sind Hartstoffkörper mit einer Markierung und verschiedene Verfahren bekannt, Hartstoffkörper mit einer Markierung zu versehen:
gängig ist etwa ein Einpressen von Markierungen als Hilfe bei einer Ausrichtung des Hartstoffkörpers im späteren Gebrauch. Die Einbringung solcher Markierungen erfolgt typischerweise zusammen mit einem Pressvorgang des Hartstoffkörpers vor einem Sintern. Eine solcherart eingebrachte Markierung einer Wendeschneidplatte ist beispielsweise in Figuren 5 und 6 der WO2014161658 (A1) zu sehen. Auf diese Weise sind nur geringe Informationsmengen abbildbar. Zudem ist der Informationsgehalt bei jedem Pressvorgang der gleiche, kann also nicht variiert werden. Eine Individualisierung der Information, etwa zur Rückverfolgbarkeit, ist nicht darstellbar.

Bekannt ist auch ein Beschriften von finalisierten Werkzeugen mit Tinte oder Laser. So zeigt beispielsweise die JP2006167828 (A) eine Laserbeschriftung stirnseitig am Schaft eines Mikrobohrers.

Zwar sind mit einem Beschriften größere Informationsmengen darstellbar, doch ist eine Markierung mit Tinte gerade bei rauen Einsatzbedingungen nicht dauerhaft.

Bei einer Laserbeschriftung wiederum entstehen durch die lokale Wärmeeinbringung Mikrorisse an der Oberfläche des Hartstoffkörpers, sodass dieser eine mechanische Schädigung erfährt.

Die WO2009/061109 (A1) zeigt einen Einsatz für ein Grabwerkzeug, welcher Einsatz einen Trägerkörper und eine darauf ausgebildete super-harte Schicht umfasst. Am Trägerkörper kann eine Markierung eingebracht sein.

Die Einbringung der Markierung erfolgt beispielsweise über Übertragung einer Prägung eines Pressstempels und anschließendes Sintern des Trägerkörpers.

Die US2017/213 116 (A1) zeigt das Einbringen von Markierungen in einen Körper beim 3D Drucken. Die Identifikation wird durch strukturelle Codierung im Inneren des Werkstücks ausgebildet.

Die EP3566799 (A1) - ein Stand der Technik nach A. 54(3) EPÜ - zeigt ein Verfahren zur Markierung von Grünkörpern umfassend Hartstoff, metallische Binderphase und ein organisches Bindersystem und anschließendes Sintern. Bei der Markierung mittels Laser wird selektiv der organische Binder entfernt, wodurch die Oberfläche derart verändert wird, dass sie einen Kontrast bildet.

Die US9678501 (B2) zeigt ein System und Verfahren zur Nachverfolgung von Komponenten in Brennstoffzellen. Die Markierung der Brennstoffzellenbauteile erfolgt insbesondere durch temperaturbeständige Tinten.

Aufgabe der vorliegenden Erfindung ist es, einen verbesserten Hartstoffkörper sowie ein verbessertes Verfahren zur Herstellung eines Hartstoffkörpers anzugeben.

Die Aufgabe wird gelöst durch einen Hartstoffkörper nach Anspruch 1 bzw. Verfahren zur Herstellung eines Hartstoffkörpers nach Anspruch 9.

Der erfindungsgemäße Hartstoffkörper weist auf:
wenigstens eine Markierung an einer Oberfläche des Hartstoffkörpers, wobei die Markierung als Anordnung einer Mehrzahl diskreter Informationselemente in Form von Vertiefungen in der Oberfläche des Hartstoffkörpers ausgebildet ist,
- wobei zumindest einige der Informationselemente in einer Draufsicht eine längste Abmessung kleiner 500 µm, bevorzugt kleiner 250 µm, weiter bevorzugt kleiner 130 µm aufweisen und wobei die Informationselemente zumindest einen Teil eines Matrix-Codes oder eines Balkencodes bilden und wobei die Informationselemente vor einem Sinterschritt durch einen Energiestrahl eingebracht und zumindest teilweise von einer Sinteroberfläche bedeckt sind und wobei die Vertiefungen eine Profiltiefe zwischen 5 bis 100 µm aufweisen.

Durch die Realisierung der Markierung aus einer Vielzahl diskreter Informationselemente kann eine von der Markierung transportierte Information über die Anordnung und Anzahl der Informationselemente bestimmt werden. Dies erlaubt eine besonders einfache Variation der Information, welche von der Markierung codiert wird.

Als Abmessung eines Informationselements ist bei einem quadratischen Informationselement ist die Kantenlänge gemeint, bei einem rechteckigen Informationselement die Länge der längeren Kante, bei einem kreisrunden Informationselement der Durchmesser.

Indem vorgesehen ist, dass zumindest einige der Informationselemente eine längste Abmessung von kleiner 500 µm, bevorzugt kleiner 250 µm, weiter bevorzugt kleiner 130 µm aufweisen, kann eine besonders hohe Informationsdichte der Markierung erreicht werden. Unter "einige" soll hier "wenigstens eines" verstanden werden.

Die Informationselemente können unterschiedliche Größen und / oder Formen aufweisen.

Wesentlich ist aber, dass zumindest einige der Informationselemente in einer Draufsicht eine längste Abmessung kleiner 500 µm, bevorzugt kleiner 250 µm, weiter bevorzugt kleiner 130 µm aufweisen.

Dies erlaubt die Realisierung einer besonders hohen Informationsdichte der Markierung.

Der Verzicht auf das Merkmal, wonach zumindest einige der Informationselemente in einer Draufsicht eine längste Abmessung kleiner 500 µm, bevorzugt kleiner 250 µm, weiter bevorzugt kleiner 130 µm aufweisen, würde eine wesentliche Einschränkung der von der Markierung auf einer gegebenen Fläche codierbaren Information bedeuten.

Für eine Produktkennzeichnung zur Rückverfolgbarkeit muss eine die Produktkennzeichnung tragende Markierung große Informationsmengen abbilden.

Handelt es sich bei dem Hartstoffkörper um eine Wendeschneidplatte oder um ein rotierendes Werkzeug, beispielsweise um einen Bohrer oder Fräser, sind nur sehr kleine Flächen zur Aufbringung einer Markierung verfügbar. Dies liegt daran, dass die betreffenden Hartstoffkörper (beispielsweise Wendeschneidplatten) sehr geringe Bauteilabmessungen aufweisen können und / oder die Auswahl geeigneter Flächen am Hartstoffkörper begrenzt ist, da bestimmte Flächen bei einem Gebrauch des Hartstoffkörpers einem Verschleiß ausgesetzt sind.

Diese Bedingungen führen zur Forderung nach einer Markierung mit hoher Informationsdichte.

Beim Hartstoffkörper handelt es sich im Rahmen der vorliegenden Anmeldung um einen pulvermetallurgisch hergestellten Körper umfassend Hartstoffkörner und wenigstens eine metallische Binderphase. Bei der Herstellung des Hartstoffkörpers wird wenigstens ein pulverförmiger Ausgangsstoff zunächst zu einem Grünling konsolidiert und anschließend gesintert. Die Konsolidierung kann beispielsweise über Pressen oder Extrusion erfolgen. Beim Sintern führen Diffusion und gegebenenfalls das Auftreten schmelzflüssiger Phasen zu einer weiteren Verdichtung des Körpers.

Zu unterscheiden ist dabei zwischen einem organischen Binder (auch als organisches Hilfsmittel bezeichnet), etwa Presshilfsmittel, welcher zur Verarbeitbarkeit des Pulvers zugegeben wird und sich bei der Sinterung verflüchtigt, und dem metallischen Binder, welcher im Gefüge des gesinterten Hartstoffkörpers die Matrix bildet.

Unter einer Sinteroberfläche wird eine durch einen Sinterprozess bedingte oberflächliche Zone verstanden, welche in ihren Eigenschaften vom Kern des Hartstoffkörpers abweicht. So ist im Bereich der Sinteroberfläche eine Anreicherung an Binderphase zu erkennen und in der Regel etwaige Übergänge und Kanten unter dem Einfluss des Sinterprozesses verrundet. Häufig unterscheidet sich die Sinteroberfläche auch chemisch vom Kern des Hartstoffkörpers, da sich beim Sinterprozess "fremde" Stoffe aus der Sinterumgebung abscheiden können.

Der Fachmann kann somit eine Sinteroberfläche über einfache metallographische und / oder chemische Verfahren erkennen.

Der Fachmann kann auch feststellen, ob eine Oberfläche nach einem Sinterschritt bearbeitet wurde, in welchem Fall die Sinteroberfläche zumindest teilweise entfernt ist.

Das Merkmal der zumindest teilweisen Bedeckung der Informationselemente durch eine Sinteroberfläche bzw. eine Sinterhaut bringt zum Ausdruck, dass die Markierung nach ihrer Einbringung eine Sinterung erfahren hat. Die Markierung liegt also in einem - nach ihrer Einbringung - gesinterten Zustand vor. Die Markierung wurde vor einem Sintern eingebracht. Dieser Zustand kann durch das Vorhandensein einer Sinteroberfläche, insbesondere einer Sinterhaut festgestellt werden.

Ist der Hartstoffkörper nach dem Sintern von einer binderreichen Schicht bedeckt, spricht man von einer Sinterhaut als besonderer Ausprägung einer Sinteroberfläche. Insbesondere bei Hartstoffkörpern mit Bindergehalten von über 2-3 gew. % wird eine Sinterhaut beobachtet. Bei sehr geringen Bindergehalten wird keine Sinterhaut beobachtet.

Unter Bindergehalt wird der Anteil (in Gewichts-%) an metallischem Binder im Hartstoffkörper verstanden.

Insbesondere kann die Sinterhaut derart ausgebildet sein, dass keine oder nur wenige Hartstoffkörner aus der Sinterhaut an die Oberfläche ragen. Insbesondere kann die Sinterhaut gänzlich aus Binderphase bestehen. Die Dicke der Sinterhaut liegt in der Regel zwischen unter 1 µm und 10 µm.

Mit dem Merkmal, wonach die Informationselemente zumindest teilweise von einer Sinteroberfläche, insbesondere einer Sinterhaut bedeckt sind, ist der besondere Vorteil verbunden, dass die Markierung dauerhaft und ohne mechanische Schädigung des Hartstoffkörpers vorliegt.

Denn durch die oben angesprochene Verrundung von vormals scharfen Übergängen durch den Sinterprozess ist eine Kerbwirkung vormalig scharfer Übergänge oder Kanten verringert.

Ist hingegen eine Markierung an einem gesinterten Hartstoffkörper nachträglich (also nach dem Sinterschritt) eingebracht, sind lokal scharfe Übergänge oder Risse vorhanden.

Freilich kann es vorkommen, dass die Sinterhaut an einigen wenigen der Informationselemente verletzt oder nicht mehr vorhanden ist, beispielsweise durch mechanische und / oder chemische Einwirkungen oder Nachbehandlungsschritte.

So kann etwa durch ein nachträgliches Polieren, Strahlen oder Bürsten eine Sinteroberfläche bzw. eine Sinterhaut zumindest teilweise entfernt worden sein. Der günstigen Wirkung des nachträglich erfolgten Sinterns hinsichtlich der mechanischen Eigenschaften tut dies keinen Abbruch.

Indem also die Informationselemente zumindest teilweise von einer Sinteroberfläche bedeckt sind, besteht an den Informationselementen eine im Wesentlichen glatte Oberfläche ohne schroffe Kantenübergänge und / oder Mikrorisse.

Darin unterscheidet sich die erfindungsgemäße Markierung deutlich von Markierungen, die etwa durch eine Laserbeschriftung an bereits gesinterten Hartstoffkörpern eingebracht sind: in diesem Fall nämlich liegen von der lokalen Wärmeeinbringung durch einen Laserstrahl herrührende Mikrorisse und / oder andere Defekte vor, die zu einer mechanischen Schwächung des Hartstoffkörpers führen.

Die erfindungsgemäßen Merkmale ermöglichen daher in ihrem Zusammenwirken eine hohe Informationsdichte der Markierung bei gleichzeitiger Sicherstellung von günstigen mechanischen Eigenschaften des Hartstoffkörpers.

Bevorzugt sind die Informationselemente vor einem Sinterschritt unter Ausbildung flüssiger Phasen eingebracht. Bei einem Sinterschritt unter Ausbildung flüssiger Phasen wird ein Teil der Bestandteile, insbesondere Binderphasen, eines so gesinterten Körpers während der Sinterung flüssig.

Informationselemente, die vor einem Sinterschritt unter Ausbildung flüssiger Phasen eingebracht sind unterscheiden sich von solchen, die nach einem Sinterschritt unter Ausbildung flüssiger Phasen eingebracht sind. Für den Fachmann sind Informationselemente, die vor einem Sinterschritt unter Ausbildung flüssiger Phasen eingebracht sind, leicht von solchen zu unterscheiden, die nach einem Sinterschritt unter Ausbildung flüssiger Phasen eingebracht sind. Das Auftreten flüssiger Phasen bewirkt unter anderem die Ausbildung einer ausgeprägten Sinterhaut auf den Informationselementen und führt auf mikroskopischer Ebene zu einer Verrundung und Glättung der die Informationselemente bildenden Vertiefungen. Dadurch unterscheidet sich ein Oberflächenbild solcherart erzeugter Strukturen von solche, die nach einem Sinterschritt unter Ausbildung flüssiger Phasen eingebracht sind.

Erfindungsgemäß sind die Informationselemente durch einen Energiestrahl, beispielsweise einen Laser- oder Elektronenstrahl eingebracht.

Erfindungsgemäß bilden die Informationselemente eine maschinenlesbare Markierung, insbesondere zumindest einen Teil eines Matrix-Codes oder eines Balkencodes.

Dies beschreibt eine besonders vorteilhafte Ausgestaltung der Markierung: die Markierung ist im Falle des Balkencodes in Form einer Anordnung von Informationselemente in Form von im Wesentlichen rechteckigen Balken realisiert. Der Informationsgehalt ergibt sich aus den Breiten der Balken, den Abständen zwischen den Balken und der Reihenfolge der Balken. Die Höhe der Balken enthält keine Information. Man spricht daher von einem 1-dimensionalen Code.

Weitaus höhere Informationsdichten können jedoch mit 2-dimensionalen Codes, insbesondere mit Matrix-Codes erzielt werden. Bekannte Matrix-Codes sind der QR-Code, der DataMatrix Code, der MaxiCode und der Aztec-Code. In Fall von Matrix-Codes besteht die Markierung aus einer Anordnung von Informationselementen entlang zweier Raumrichtungen innerhalb eines Rechtecks, insbesondere innerhalb eines Quadrats. Die Information wird über die Anordnung von sogenannten Zellen codiert. Eine Zelle bildet die kleinste Informationseinheit des Matrix-Codes. Der Code besteht aus einem Muster von Zellen.

Im Sprachgebrauch der vorliegenden Erfindung können Informationselemente vorliegen, die genau einer Zelle entsprechen und auch Informationselemente, die mehrere Zellen beinhalten.

Zwar enthalten Matrix-Codes durchaus Muster von miteinander verbundenen Zellen, jedoch ist es zur Ausschöpfung der Informationsdichte und Informationsvielfalt sinnvoll, auch einzelnstehende Zellen vorzusehen. "Einzelnstehend" bedeutet hier, dass die betreffende Zelle keine Verbindung oder nur einen punktförmigen Kontakt zu benachbarten Zellen hat. Bevorzugt sind die einzelnen Zellen gleich groß und von gleicher Form. Somit können bei der Einbringung der einzelnen Informationselemente die gleichen Parameter verwendet werden. Zudem wird eine Maschinenlesbarkeit erleichtert.

In Matrix-Codes weisen die Zellen insbesondere bevorzugt eine im Wesentlichen rechteckige Form auf. Sie können aber auch rund oder zumindest gerundet ausgeführt sein. Besonders bevorzugt weisen die Zellen eine in einer Draufsicht im Wesentlichen quadratische Form auf.

Der Informationsgehalt von einigen DataMatrix Codes ist in der folgenden Tabelle wiedergegeben:

**Tabelle 1: Informationsgehalt von DataMatrix Codes verschiedener Zellenanzahl**

| **Zellenanzahl** | **Informationsgehalt** | | |
|---|---|---|---|
| | numerisch | alphanumerisch | Bytes |
| 10 × 10 | 6 | 3 | 1 |
| 24 × 24 | 72 | 52 | 34 |
| 26 × 26 | 88 | 64 | 42 |
| 12 × 26 | 32 | 22 | 14 |

Die Informationsdichte einer als Matrix-Code ausgeführten Markierung soll an einem Zahlenbeispiel diskutiert werden:
eine Zelle als kleinste diskrete Einheit sei quadratisch und weise eine Kantenlänge von 100 µm auf.

Eine Markierung mit einer Zellenanzahl von 12 × 26 Zellen kann somit auf einer Fläche von 1,2 mm × 2,6 mm = 3,12 mm² ausgebildet werden. Die hierbei erzielbare Informationsdichte beträgt rund 4,5 bytes / mm² (14 bytes / 3,12 mm²).

Anders ausgedrückt können bei der Kantenlänge des vorliegenden Beispiels 32 Ziffern auf einer Fläche von 3,12 mm² codiert werden.

Ein Matrix-Code mit einer Zellenanzahl von 12 × 26 hat sich für typische Anwendungen von Hartstoffkörpern besonders bewährt:
Ein solcher Code bietet einen für Anwendungen wie Wendeschneidplatten oder rotierende Werkzeuge ausreichenden Informationsgehalt. Gleichzeitig benötigt die Markierung bei ausreichend kleinen Abmessungen der sie bildenden Zellen nur eine kleine Fläche und eignet sich damit besonders für eine Produktkennzeichnung von häufig recht kleinen (wenige bis etliche mm großen) Hartstoffkörpern, wie Wendeschneidplatten oder rotierenden Werkzeugen.

Bevorzugt ist vorgesehen, dass die Vertiefungen, durch welche die Informationselemente realisiert sind, eine Profiltiefe zwischen 5 bis 100 µm, bevorzugt zwischen 10 und 50 µm, weiter bevorzugt zwischen 15 und 45 µm aufweisen.

Mit Profiltiefe ist der senkrechte Abstand eines tiefsten Punktes einer Vertiefung von einer benachbarten Oberfläche gemeint. Die Profiltiefe ist beispielsweise aus einem Querschliff oder zerstörungsfrei durch optische Messverfahren bestimmbar.

Die Wahl der Profiltiefe hängt auch davon ab, ob die jeweilige Fläche einen weiteren Bearbeitungsschritt erfährt oder nicht.

Ist die Markierung an einer Fläche ausgebildet, die wenig Verschleiß ausgesetzt ist, kann eine besonders geringe Profiltiefe gewählt werden.

Eine geringe Profiltiefe ist insbesondere bei kleinen Bauteilabmessungen bevorzugt, da nur wenig Material abgetragen und ein Querschnitt entsprechend wenig geschwächt wird.

Bevorzugt codiert die Markierung wenigstens eine Information über eine Charge und / oder Abmessung und / oder Zusammensetzung des Hartstoffkörpers. Besonders bevorzugt codiert die Markierung eine ein-eindeutige Produktinformation des Hartstoffkörpers, welche eine Rückverfolgung erlaubt. Die Markierung kann beispielsweise eine Zahlen- / Zeichenfolge (etwa eine GS1-Identifikationsnummer, Auftragsnummer, fortlaufende Zahl usw.) codieren. Die dazugehörige Produktinformation des Hartstoffkörpers kann etwa in einer Datenbank hinterlegt sein. Auch ist es vorstellbar, am Hartstoffkörper direkt auslesbare Produktinformationen aufzubringen.

Der Hartstoffkörper besteht aus einem Verbundwerkstoff aus Hartstoffkörnern, welche von einem Binder umgeben sind. In der Regel handelt es sich bei dem Binder um ein Metall oder eine Legierung.

Bevorzugt handelt es sich bei dem Hartstoffkörper um einen Hartmetallkörper. Unter Hartmetall wird ein Werkstoffverbund aus Karbiden als Hartstoff-Phase und zähen Metallen der Eisengruppe (Fe, Co, Ni) als Binderphase verstanden. Insbesondere sind die Hartstoffkörner von Wolframkarbid (WC) gebildet. Der Binder ist im Fall von Hartmetall in der Regel Kobalt (Co). Es kommen aber auch anderen Metalle oder Legierungen als Binder in Betracht. Im Englischen Sprachgebrauch wird Hartmetall häufig auch als *cemented carbide* bezeichnet. Ein Bindergehalt an metallischem Binder liegt typischerweise zwischen 2 gew. % und 20 gew.%.

Bevorzugt ist der der Hartstoffkörper als Werkzeug, beispielsweise als Wendeschneidplatte, als Schaftfräswerkzeug oder Bohrer ausgebildet. Die hohe Informationsdichte der erfindungsgemäßen Markierung ist hier besonders dienlich, da Werkzeuge häufig geringe Abmessungen aufweisen und / oder nur kleine für eine Markierung nutzbare Flächen am Werkzeug verfügbar sind.

Schutz wird auch begehrt für ein Verfahren zur Herstellung eines Hartstoffkörpers.

Das Verfahren umfasst die Schritte:
- Herstellen eines Grünkörpers umfassend Hartstoff, Binder und organisches Hilfsmittel,
- Einbringen einer Mehrzahl von Informationselemente bildenden Vertiefungen am Grünkörper mittels Einwirkung eines Energiestrahls zur Ausbilden einer Markierung als Anordnung der Mehrzahl von Informationselementen,
- Sintern des Grünkörpers zum Hartstoffkörper unter Ausbildung einer die Informationselemente zumindest teilweise bedeckenden Sinteroberfläche.

Es handelt sich also um ein pulvermetallurgisches Herstellungsverfahren zur Herstellung eines Hartstoffkörpers.

Zunächst wird ein Grünkörper hergestellt. Dazu wird eine Pulvermischung umfassend Hartstoff, beispielsweise Wolframkarbid (WC) und Binder, beispielsweise Kobalt (Co) zusammen mit einem organischen Hilfsmittel einem Formgebungsschritt unterzogen. Die Herstellung des Grünkörpers kann beispielsweise durch Pressen oder Extrudieren erfolgen.

Unter organischen Hilfsmitteln werden hier Presshilfsmittel, Plastifizierer, Wachse und Mittel dergleichen zusammengefasst, welche eine Grünformgebung unterstützen und dem Grünkörper Festigkeit verleihen.

Durch die Einwirkung eines Energiestrahls, beispielsweise eines Laser- oder Elektronenstrahls, wird der Grünkörper oberflächennah lokal erwärmt. Die Verwendung eines Lasers ist kostengünstig und daher bevorzugt. Untersuchungen der Anmelderin haben gezeigt, dass wohl durch den Wärmeeintrag kleinräumig organisches Hilfsmittel verdampft und durch den entstehenden Dampfdruck Hartstoffkörner aus dem Grünkörper geschleudert werden. Solchermaßen können wohldefinierte Vertiefungen in die Oberfläche des Grünkörpers eingebracht werden.

Bei geeigneter Wahl der Strahlparameter erfolgt ein Materialabtrag ohne thermische Schädigung des Grundkörpers.

Die Strahlparameter sind durch Versuche ermittelbar. Die wesentlichen Parameter sind die Strahlleistung und Einwirkdauer. Die eingebrachten Vertiefungen können beispielsweise unter einem Lichtmikroskop oder einem Rasterelektronenmikroskop (REM) charakterisiert werden.

Bei Pulverpresslingen ohne oder mit nur sehr geringen Anteilen an organischen Hilfsmitteln konnte der Effekt nicht oder nur sehr schwach beobachtet werden. Ein für das Verfahren günstiger Gehalt an organischen Hilfsmitteln liegt beispielsweise 0,5 - 5 gew.%.

Die Vertiefungen bilden die Informationselemente, welche in ihrer Anordnung als Markierung eine Information codieren.

Das anschließende Sintern erfolgt unter Ausbildung einer die Informationselemente zumindest teilweise bedeckenden Sinteroberfläche. Etwaige scharfe Übergänge der am Grünkörper eingebrachten Vertiefungen werden durch den Sinterschritt geglättet oder verrundet. Die solchermaßen am gesinterten Hartstoffkörper ausgebildeten Informationselemente stellen daher keine Zonen mechanischer Schädigung dar. Insbesondere sind kaum oder keine Mikrorisse vorhanden, von welchen gegebenenfalls ein Bruch des Hartstoffkörper initiiert werden könnte.

Dies ist besonders vorteilhaft gegenüber einem Verfahren, bei dem eine Markierung an einem gesinterten Hartstoffkörper nachträglich (also nach dem Sinterschritt) eingebracht wird.

Neben den mechanischen Vorzügen ist das Verfahren auch wirtschaftlich interessant, da eine nachträgliche Bearbeitung einer an einem fertig gesinterten Hartstoffkörper eingebrachten Markierung mit dem Ziel einer Verrundung entfallen kann.

Ein optischer Kontrast zwischen Vertiefungen und benachbarten, nicht vom Energiestrahl beeinflussten Oberflächen wird durch das Sintern verringert.

Die Erfindung verfolgt somit den kontraintuitiven Ansatz, den für eine Lesbarkeit günstigen Kontrast zu verringern.

Dafür wird aber eine Markierung erhalten, die keine mechanische Schwächung des Hartstoffkörpers bewirkt.

Es sei zum besseren Verständnis noch einmal wiederholt, dass die Informationselemente bildenden Vertiefungen im Grünzustand einbracht werden. Anschließend wird der Grünkörper gesintert. Der Grünkörper erfährt beim Sintern einen deutlichen Schwund. Ein typischer linearer Sinterschwund für Hartmetall liegt bei 20%, d.h. in jeder Richtung wird der Hartmetallkörper nach dem Sintern um diesen Betrag kleiner sein als der Grünkörper. Das bedeutet auch, dass ein am Grünkörper eingebrachtes Informationselement um diesen Betrag schrumpft. Bei der Einbringung der Informationselemente ist also zu beachten, welche Abmessungen ein Informationselement im gesinterten Zustand wenigstens aufweisen muss, um beispielsweise von einem Lesegerät erkannt werden zu können.

Es ist ein besonderer Vorteil des erfindungsgemäßen Verfahrens, dass eine Produktkennzeichnung bereits am Grünkörper erfolgt und somit eine Rückverfolgbarkeit vom fertigen Hartstoffkörper über den Sinterschritt bis hin zum Grünkörper möglich ist.

Bis dato war aus dem Stand der Technik keine Möglichkeit bekannt, eine dauerhafte, ein-eindeutige Bauteilinformation tragende Markierung von einem Grünkörper auf einen gesinterten Hartstoffkörper zu übertragen. Grünkörper sind außerordentlich spröde und erlauben keine mechanische Markierungsverfahren wie ein Nadeln. Beschriftungen wie etwa von einer Tintenstrahlmarkierung gehen wiederum beim Sintern verloren.

So behilft man sich häufig mit einer Beschriftung von Chargiereinrichtungen beim Sintern, Übertragen einer Chargennummer über Etiketten auf Transportboxen und anschließendes Markieren der fertigen Hartstoffkörper. Durch die Erfindung kann jedoch eine Rückverfolgbarkeit von pulvermetallurgisch hergestellten Hartstoffkörpern, wie etwa von Wendeschneidplatten, rotierenden Werkzeugen und dergleichen, vom gesinterten Bauteil zurück bis zum Grünkörper gewährleistet werden. So wird die Möglichkeit einer Rückverfolgbarkeit über alle Prozessschritte erreicht.

Bevorzugt erfolgt das Sintern als ein Flüssigphasensintern.

Bevorzugt erfolgt die Einbringung der Vertiefungen bzw. der Informationselemente über Laserstrahlen. Geeignete Laserapparaturen sind beispielsweise Beschriftungslaser oder auch Laser zur Materialbearbeitung, wie sie etwa zum Strukturieren von Spritzgusswerkzeugen kommerziell verfügbar sind. Eine Strahlleistung von beispielsweise 50 Watt hat sich als weitaus ausreichend erwiesen.

In der Praxis kann eine Markierung gleichermaßen durch längeres Einwirken des Energiestrahls bei geringer Strahlleistung wie durch kürzeres Einwirken des Energiestrahls bei höherer Strahlleistung erzeugt werden.

Die geeigneten Parameter hängen stark von Faktoren wie Gehalt an organischen Hilfsmitteln, Zusammensetzung der organischen Hilfsmittel, Korngröße des Hartstoffs, Bindergehalt des metallischen Binders etc. ab.

Der mit oben genannten Laserapparaturen vertraute Fachmann findet ohne großen Aufwand die geeigneten Parameter zu Erzeugung einer Markierung der angegebenen Charakteristik.

Weitere Vorteile und Zweckmäßigkeiten der Erfindung ergeben sich anhand der nachfolgenden Beschreibung von Ausführungsbeispielen unter Bezugnahme auf die beigefügten Figuren.

Die Figuren zeigen:
- Fig. 1:: einen Hartstoffkörper mit einer Markierung nach dem Stand der Technik
- Fig. 2a-2b:: einen Hartstoffkörper nach einem ersten Ausführungsbeispiel
- Fig. 3a-3b:: Hartstoffkörper in weiteren Ausführungsbeispielen
- Fig. 4: eine Markierung nach einem Ausführungsbeispiel
- Fig. 5a-d: Details zu Informationselementen
- Fig. 6a-6c: Markierungen nach einem Ausführungsbeispiel
- Fig. 7a-7b: Markierungen nach einem weiteren Ausführungsbeispiel
- Fig. 8: einen schematischen Querschnitt durch einen Hartstoffkörper mit einer Markierung
- Fig. 9: einen Querschliff durch einen Hartstoffkörper mit einer Markierung
- Fig. 10: einen Querschliff durch einen Hartstoffkörper im Detail
- Fig. 11: Schema des Verfahrens zur Herstellung eines Hartstoffkörpers

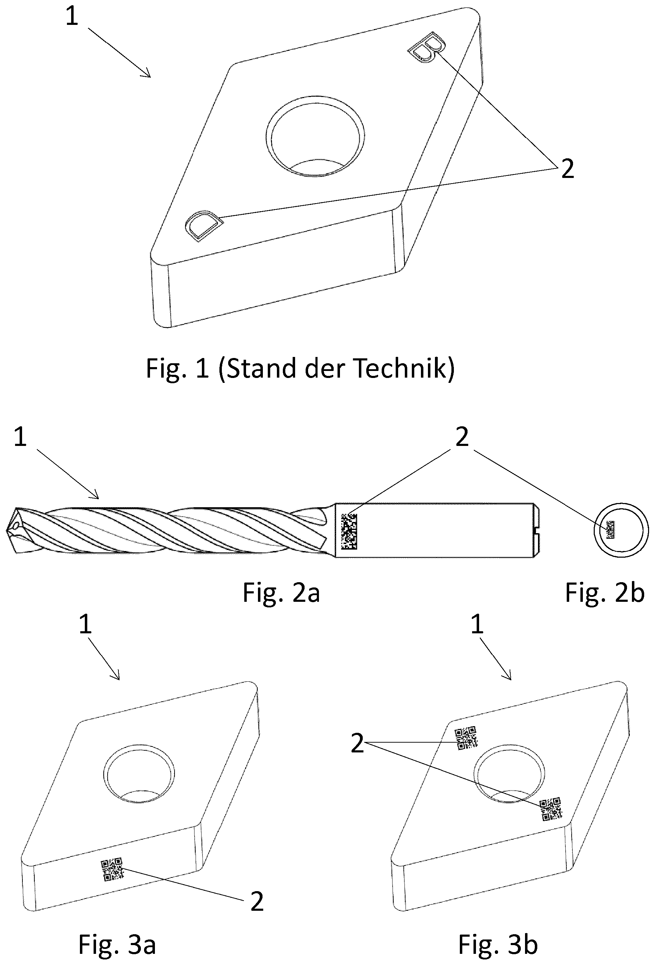

Figur 1 zeigt einen Hartstoffkörper 1 mit einer Markierung 2 nach dem Stand der Technik. Im vorliegenden Beispiel ist der Hartstoffkörper 1 als Wendeschneidplatte ausgeführt. Die Markierung 2 liegt in Form von eingepressten Buchstaben vor, welche zur Kennzeichnung einer Einbaulage der Wendeschneidplatte dienen. Die Einbringung der Markierung erfolgt typischerweise im Presswerkzeug.

Der Informationsgehalt einer solchen Markierung ist gering. Auch ist die Information nicht individualisierbar, vielmehr tragen zumindest alle Hartstoffkörper einer Charge die gleiche Markierung.

Figur 2 zeigt einen Hartstoffkörper 1 nach einem ersten Ausführungsbeispiel. Der Hartstoffkörper 1 ist hier als Vollhartmetall-Bohrwerkzeug ausgeführt. In einer Variante gemäß Figur 2a trägt das Bohrwerkzeug eine Markierung 2 auf einem Einspannabschnitt. Alternativ oder zusätzlich kann eine Markierung beispielsweise auf einem stirnseitigen Ende des Einspannabschnitts aufgebracht sein, wie in Figur 2b gezeigt.

Die Markierung 2 ist in diesem Ausführungsbeispiel als DataMatrix Code ausgeführt.

Figuren 3a und 3b zeigen Hartstoffkörper 1 nach weiteren Ausführungsbeispielen. Der Hartstoffkörper 1 ist hier als Wendeschneidplatte ausgeführt. In einer Variante gemäß Figur 3a trägt die Wendeschneidplatte eine Markierung 2 auf einer Freifläche. Alternativ oder zusätzlich kann eine Markierung 2 auch auf einer Spanfläche aufgebracht sein, wie in der Variante nach Figur 3b gezeigt. Die Markierung 2 ist in diesem Ausführungsbeispiel als QR-Code ausgeführt.

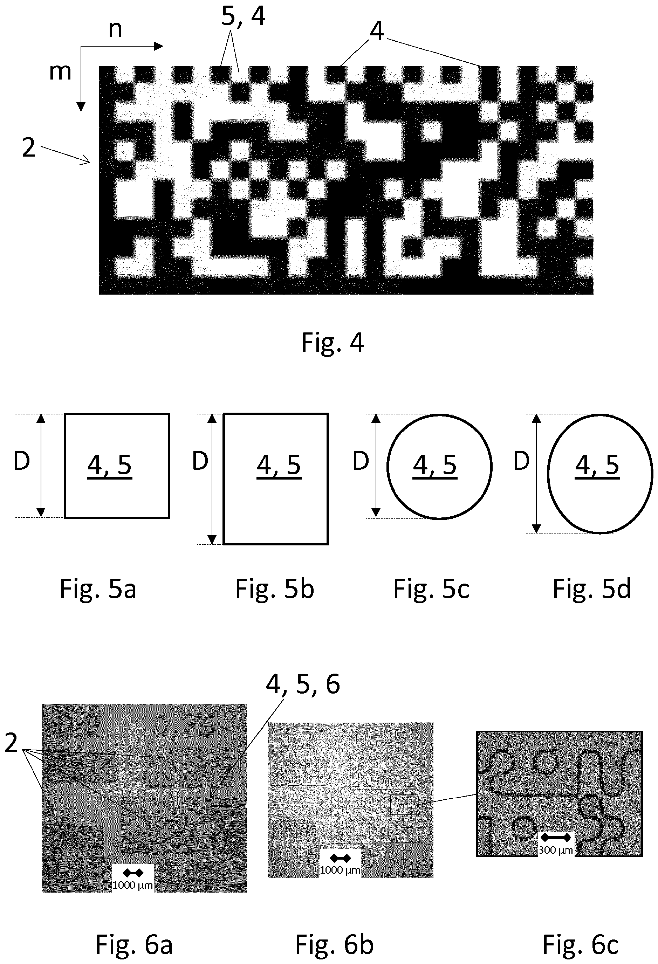

Figur 4 zeigt schematisch ein Beispiel einer Markierung 2, die als DataMatrix Code ausgeführt ist. Matrix-Codes, so auch DataMatrix Codes, bestehen aus einer Abfolge von sogenannten Zellen 5 (im Zusammenhang mit Matrix-Codes auch als "Module" bezeichnet) entlang zweier Richtungen, in der Regel in Form eines Rechtecks oder Quadrats. Eine Zelle 5 bildet die kleinste Informationseinheit des Matrix-Codes. Der Code besteht aus einem Raster von (n × m) Zellen 5, im vorliegenden Beispiel ist n = 26 und m = 12, d.h. es bestehen 26 × 12 = 312 Zellen. Die Zellen 5 sind hier quadratisch.

Physisch realisiert wird die Markierung 2 durch Schaffung von Kontrast zwischen Zellen. Wird - nicht erfindungsgemäß - ein Matrix-Code mit Tinte gedruckt, so werden also bestimmte Zellen im dem Raster von (n × m) Zellen bedruckt, während andere Zellen unbedruckt bleiben. Die gleiche Information kann auch über das Negativ transportiert werden, d.h. durch die Umkehr von bedruckt - unbedruckt.

Im Rahmen der vorliegenden Erfindung wird der Kontrast zwischen Zellen 5 durch Informationselemente 4 in Form von Vertiefungen in einer Oberfläche eines Hartstoffkörpers hergestellt.

Informationselemente 4 können von einer einzelnen Zelle 5 gebildet sein oder mehrere Zellen 5 umfassen.

Figuren 5a-d erläutern die Abmessungen von Informationselementen 4. In den Figuren 5a-d entsprechen die Informationselemente 4 einer oben erläuterten Zelle 5, also der kleinsten Informationseinheit eines Matrix-Codes. Als Abmessung D eines Informationselements 4 ist eine Längserstreckung in einer Draufsicht gemeint: bei einem quadratischen Informationselement 4 ist das die Kantenlänge, siehe Fig. 5a. Ein Informationselement 4 kann von der ideal quadratischen Form abweichen, wie in Figur 5b gezeigt. Hier wird als Abmessung D die Kantenlänge der längeren Kante herangezogen. Informationselemente 4 können auch kreisrund ausgebildet sein, wie in Figur 5c gezeigt. Hier wird als Abmessung D der Durchmesser herangezogen. Bei einer Abweichung von der ideal kreisrunden Form wird als Abmessung D der größte Durchmesser des Ovals herangezogen, wie in Figur 5d gezeigt. Die Informationselemente 4 können unterschiedliche Größen und / oder Formen aufweisen. Wesentlich ist aber, dass zumindest einige der Informationselemente 4 in einer Draufsicht eine längste Abmessung D kleiner 500 µm, bevorzugt kleiner 250 µm, weiter bevorzugt kleiner 130 µm aufweisen.

Figur 6a zeigt ein Foto eines Grünköpers aus Hartmetall mit verschiedenen Markierungen 2. Die Markierungen 2 sind in diesem Beispiel als Matrix-Codes ausgeführt und bestehen jeweils aus einer Vielzahl von Informationselementen 4, welche in ihrer Anordnung die Information der Markierung 2 codieren.

Die Markierungen 2 wurden durch Einwirkung eines Laserstrahls in die Oberfläche des Grünköpers aus Hartmetall eingebracht. Der Laserstrahl bewirkt einen Materialabtrag und erzeugt dadurch Vertiefungen 6, welche Informationselemente 4 bildet. Durch Einwirkung des Laserstrahls ist die Oberfläche deutlich geschwärzt. Unter dem Mikroskop wirkt die Oberfläche zerklüftet und rau. Die geometrische Form der Vertiefung 6 zusammen mit den durch die Einwirkung des Laserstrahls veränderten optischen Eigenschaften der Oberfläche bewirkt einen deutlichen Kontrast zwischen gelaserten und ungelaserten Bereichen innerhalb einer Markierung 2.

Informationselemente 4 können von einer einzelnen Zelle 5 gebildet sein oder mehrere Zellen 5 umfassen. In Figur 6a ist ein Fall durch einen Pfeil hervorgehoben, bei dem ein Informationselement 4 genau einer Zelle 5 entspricht.

Eine Zelle 5 bildet die kleinste Informationseinheit des Matrix-Codes. Ein Matrix-Code besteht aus einem Muster von Zellen. Die Zellgröße der Markierungen 2 ist in den Beispielen in Figur 6a jeweils dazu angegeben: so beträgt die Kantenlänge der quadratischen Zellen 5 der Markierung 2 oben links in der Figur 0,2 mm, die Kantenlänge der quadratischen Zellen 5 der Markierung 2 oben rechts 0,25 mm, die Kantenlänge der quadratischen Zellen 5 der Markierung 2 unten links 0,15 mm, die Kantenlänge der quadratischen Zellen 5 der Markierung 2 unten rechts 0,35 mm. Der Größenbalken beträgt 1000 µm.

Es handelt sich in Figur 6a jeweils um Markierungen 2 mit 26 × 12 Zellen. Zusammen mit der oben erläuterten Größe der einzelnen Zellen 5 ergibt sich die jeweilige Abmessung der Markierungen 2: die Markierung 2 oben links misst (26 × 0,2 mm) X (12 × 0,2 mm) = 5,2 mm × 2,4 mm = 12,48 mm² usw.

Aus diesem Beispiel wird deutlich, dass eine möglichst kleine Zellgröße zur Erzielung hoher Informationsdichten anzustreben ist. Figur 6b zeigt ein Foto des Hartstoffkörpers, der durch Sintern des in Figur 6a gezeigten Grünkörpers erhalten wurde. Der Hartstoffkörper hat gegenüber dem Zustand vor dem Sintern einen linearen Schwund von ca. 20% erfahren. Eine Strecke also, die im Grünkörper der Figur 6a 100 µm betragen hatte, ist im Körper der Figur 6b nur noch 80 µm lang. Man erkennt, dass sich die im Grünkörper eingebrachten Vertiefungen 6 und damit die Informationselemente 4 auf den gesinterten Hartmetallkörper übertragen haben. Die Informationsdichte ist daher durch den Sinterschritt weiter erhöht, da durch den Schwund die gleiche Information nun auf einer kleineren Fläche vorliegt.

Der Kontrast zwischen Vertiefungen 6 und der vom Laserstrahl unbeeinflussten Oberfläche ist wesentlich schwächer als im Grünzustand gemäß Figur 6a. Die Informationselemente 4 auf den gesinterten Hartmetallkörper 2 von Figur 6b sind im Wesentlichen vollständig von einer Sinteroberfläche bedeckt. Die Ausbildung einer Sinteroberfläche, in diesem Beispiel eine ausgeprägte Sinterhaut, durch das Sintern bewirkt eine Verschlechterung des Kontrasts gegenüber dem ungesinterten Zustand von Figur 6a, da nun gelaserte und ungelaserte Bereiche gleichermaßen von einer Sinteroberfläche, hier Sinterhaut, bedeckt und damit hinsichtlich ihrer optischen Eigenschaften gleich oder zumindest ähnlich sind. Jedoch ist eine von den Markierung 2 ausgehende mechanische Schädigung der Oberfläche gegenüber dem ungesinterten Zustand gemildert, da das Sintern eine Verrundung der Vertiefungen 6 bewirkt. Eine Kontrastwirkung kommt nun vorwiegend durch die Morphologie, d.h. das Höhenprofil der Markierung zustande. Figur 6c zeigt einen Ausschnitt einer Markierung 2 von Figur 6b im Detail.

Die Markierung 2 ist durch ein geeignetes Lesegerät, beispielsweise einen Handscanner oder auch ein Smartphone, auslesbar.

Als sinnvolles unteres Limit für die Abmessung einzelner Zellen 5 hat sich beispielsweise eine Kantenlänge einer Zelle 5 von etwa 80 µm im gesinterten Zustand herausgestellt. Zwar erlauben die erwähnten Apparaturen, beispielsweise Markierungslaser, die Ausbildung von Zellen noch kleinerer Abmessungen, wegen des Verlusts an Kontrasts beim Sintern ist jedoch unter dem genannten Limit keine verlässliche Auslesung mehr gegeben.

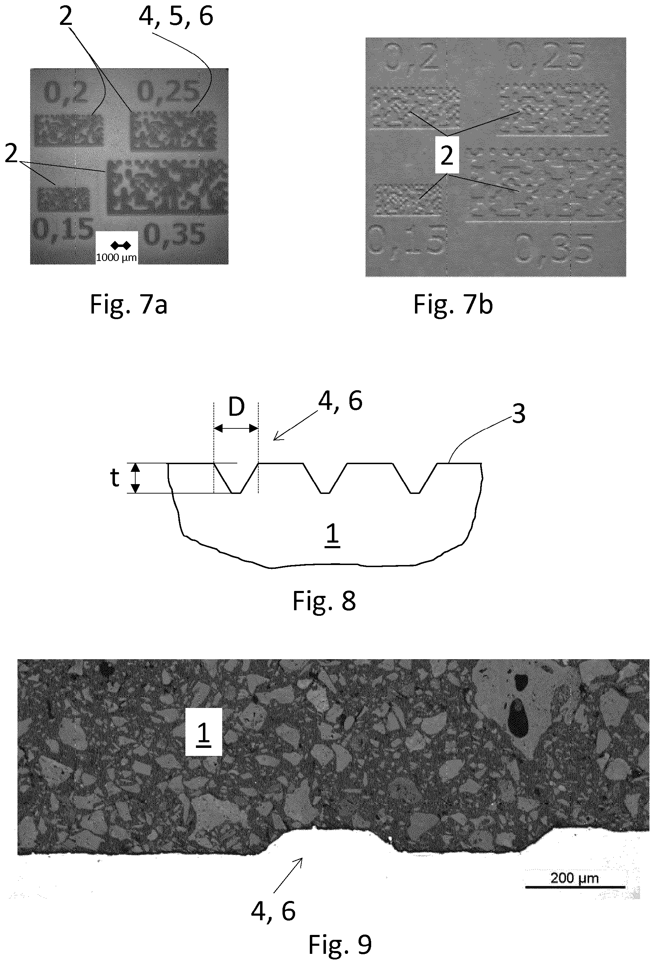

Figuren 7a bis 7b zeigen Aufnahmen analog zu Figur 6 mit variierten Strahlparametern. Es wurde eine geringere Profiltiefe als im Beispiel von Figur 6a-c gewählt. Der Kontrast ist dementsprechend schwächer ausgeprägt. Figur 7b ist zur besseren Lesbarkeit vergrößert dargestellt. In Realität ist die Markierung 2 gegenüber Figur 7a um den oben ausgeführten Sinterschwund verkleinert.

Figur 8 zeigt schematisch einen Querschnitt eines Hartstoffkörpers 1 mit Vertiefungen 6, welche Informationselemente 4 bilden. Eine Vertiefung 6 bzw. ein Informationselement 4 weist eine Abmessung D auf. Eine Profiltiefe t beschreibt die größte Tiefen-Abmessung der Vertiefung 6 normal zu einer Oberfläche 3 des Hartstoffkörpers 1. Bevorzugt ist vorgesehen, dass die Vertiefungen 6, durch welche die Informationselemente 4 realisiert sind, eine Profiltiefe t zwischen 5 bis 100 µm, bevorzugt zwischen 10 und 50 µm, weiter bevorzugt zwischen 15 und 45 µm aufweisen. Eine Vertiefung 6 weist einen trapezförmigen Querschnitt auf, der hier überhöht dargestellt ist. Das heißt, die Profiltiefe t ist hier gegenüber der Abmessung D vergrößert dargestellt. Bei realen Markierungen 2 sind die Vertiefungen 6 flacher.

Die Profiltiefe t ist beispielsweise aus einem Querschliff oder zerstörungsfrei durch optische Messverfahren bestimmbar.

Figur 9 zeigt einen realen Querschliff eines gesinterten Hartstoffkörpers 1 durch ein Informationselement 4 bzw. eine Vertiefung 6. Der metallographische Schliff wurde an der Probe von Figur 6 durchgeführt.

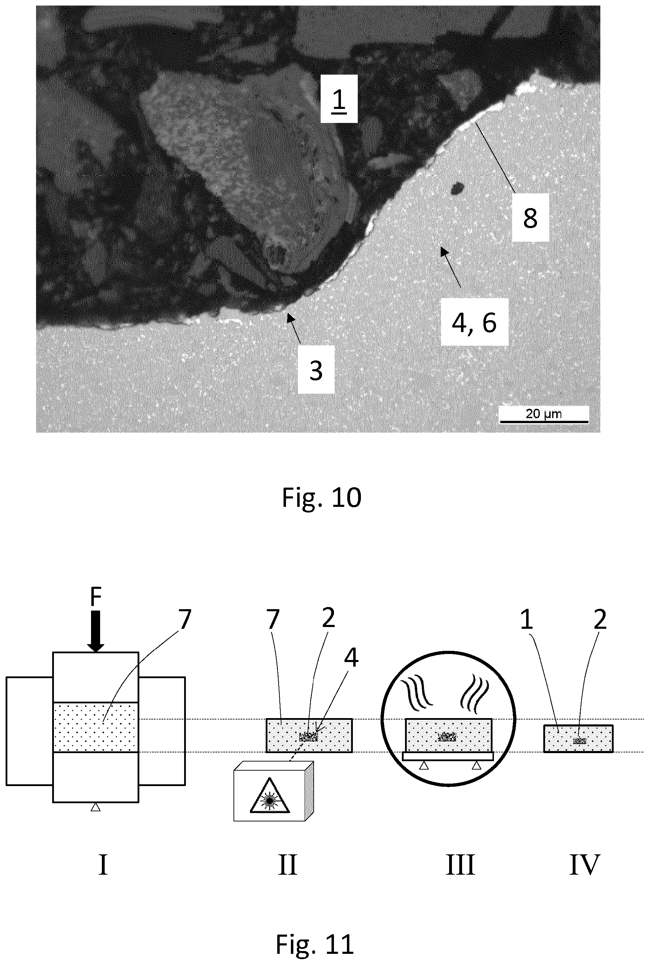

Figur 10 zeigt einen realen Querschliff eines gesinterten Hartstoffkörpers 1 durch ein Informationselement 4 bzw. eine Vertiefung 6 bei höherer Vergrößerung. Der Hartstoffkörper 1 ist in diesem Beispiel ein Hartmetall umfassend Wolframkarbid als Hartstoff und Kobalt als metallische Bindephase. Die helle Phase ist der metallische Binder (hier: Kobalt) und die dunkelgraue Phase sind die Wolframkarbid (WC) - Körner. Der Bindergehalt an Kobalt beträgt in diesem Beispiel 10 gew.%. Die Sinteroberfläche 8 ist hier als Sinterhaut ausgeprägt. Die Sinterhaut ist eine binderreiche Zone an der Oberfläche 3 und als heller Saum erkennbar. Der metallographische Schliff wurde an der Probe von Figur 6 durchgeführt. Figur 11 zeigt schematisch das erfindungsgemäße Verfahren zur Herstellung eines Hartstoffkörpers 1 mit einer Markierung 2 in einem Ausführungsbeispiel.

In einem ersten Schritt (I) wird ein Grünkörper 7 - in dem vorliegenden Ausführungsbeispiel durch Pressen - einer Pulvermischung erzeugt. Der Grünkörper 7 umfasst Hartstoff, Binder und organisches Hilfsmittel. Alternativ zum Pressen kann eine Formgebung zum Beispiel durch Extrudieren erfolgen.

In einem nächsten Schritt (II) erfolgt die Schaffung einer Markierung 2 durch Einwirken eines Energiestrahls (hier: Laser) auf den Grünkörper 7. Dazu erfolgt ein Einbringen einer Mehrzahl von Informationselemente 4 bildenden Vertiefungen 6 am Grünkörper 7 mittels Einwirkung des Energiestrahls. Die Markierung 2 ist als Anordnung einer Mehrzahl von Informationselementen 4 gebildet. Der Grünkörper 7 ist in diesem Stadium noch ungesintert.

In nächsten Schritt (III) wird der Grünkörper 7 gesintert. Das Sintern des Grünkörpers 7 zum Hartstoffkörper 1 erfolgt unter Ausbildung einer die Informationselemente 4 zumindest teilweise bedeckenden Sinteroberfläche 8. Die strichlierten Hilfslinien sollen verdeutlichen, dass der Grünkörper 7 beim Sintern schwindet und daher der Hartstoffkörper 1 kleiner als der Grünkörper 7 ist.

Im nächsten Schritt (IV) erhält man einen Hartstoffkörper 1 mit einer Markierung 2. Die Markierung 2 ist als Anordnung einer Mehrzahl diskreter Informationselemente 4 in Form von Vertiefungen 6 in der Oberfläche 3 des Hartstoffkörpers 1 ausgebildet. Die Informationselemente 4 sind zumindest teilweise von einer Sinteroberfläche 8 bedeckt.

### Liste der Bezugszeichen:

- 1: Hartstoffkörper
- 2: Markierung
- 3: Oberfläche
- 4: Informationselement
- 5: Zelle
- 6: Vertiefung
- 7: Grünkörper
- 8: Sinteroberfläche, Sinterhaut

- t: Profiltiefe
- D: Durchmesser

## Patentansprüche

1. Gesinterter Hartstoffkörper (1) mit wenigstens einer Markierung (2) an einer Oberfläche (3) des Hartstoffkörpers (1), wobei die Markierung (2) als Anordnung einer Mehrzahl diskreter Informationselemente (4) in Form von Vertiefungen (6) in der Oberfläche (3) des Hartstoffkörpers (1) ausgebildet ist,
- wobei zumindest einige der Informationselemente (4) in einer Draufsicht eine längste Abmessung (D) kleiner 500 µm aufweisen und wobei die Informationselemente (4) zumindest einen Teil eines Matrix-Codes oder eines Balkencodes bilden und wobei
- die Informationselemente (4) vor einem Sinterschritt durch einen Energiestrahl eingebracht und zumindest teilweise von einer Sinteroberfläche (8) bedeckt sind und wobei
- die Vertiefungen (6) eine Profiltiefe (t) zwischen 5 bis 100 µm aufweisen.

2. Gesinterter Hartstoffkörper (1) nach Anspruch 1, wobei zumindest einige der Informationselemente (4) in einer Draufsicht eine längste Abmessung (D) kleiner 250 µm aufweisen.

3. Gesinterter Hartstoffkörper (1) nach Anspruch 1 oder 2, wobei zumindest einige der Informationselemente (4) in einer Draufsicht eine längste Abmessung (D) kleiner 130 µm aufweisen.

4. Hartstoffkörper (1) nach einem der vorangegangenen Ansprüche, wobei die Vertiefungen (6) eine Profiltiefe (t) zwischen 10 und 50 µm, weiter bevorzugt zwischen 15 und 45 µm aufweisen.

5. Hartstoffkörper (1) nach einem der vorangegangenen Ansprüche, wobei die Markierung (2) wenigstens eine Information über eine Charge und / oder Abmessung und / oder Zusammensetzung des Hartstoffkörpers (1) codiert.

6. Hartstoffkörper (1) nach einem der vorangegangenen Ansprüche, wobei der Hartstoff aus Hartmetall gebildet ist.

7. Hartstoffkörper (1) nach Anspruch 6, wobei ein Anteil an metallischem Binder zwischen 2 gew. % und 20 gew.% liegt.

8. Hartstoffkörper (1) nach einem der vorangegangenen Ansprüche, wobei der Hartstoffkörper (1) als Werkzeug ausgebildet ist.

9. Verfahren zur Herstellung eines Hartstoffkörpers (1) nach einem der vorangegangenen Ansprüche umfassend die Schritte:
- Herstellen eines Grünkörpers (7) umfassend Hartstoff, Binder und organisches Hilfsmittel,
- Einbringen einer Mehrzahl von Informationselemente (4) bildenden Vertiefungen (6) am Grünkörper (7) mittels Einwirkung eines Energiestrahls zur Ausbildung einer Markierung (2) als Anordnung einer Mehrzahl von Informationselementen (4), wobei die Informationselemente (4) zumindest einen Teil eines Matrix-Codes oder eines Balkencodes bilden und zumindest einige der Informationselemente (4) in einer Draufsicht eine längste Abmessung (D) kleiner 500 µm aufweisen,
- Sintern des Grünkörpers (7) zum Hartstoffkörper (1) unter Ausbildung einer die Informationselemente (4) zumindest teilweise bedeckenden Sinteroberfläche (8).

10. Verfahren nach Anspruch 9, wobei das Sintern des Grünkörpers (7) als Flüssigphasensintern erfolgt.

11. Verfahren nach Anspruch 9 oder 10, wobei der Energiestrahl ein Laserstrahl ist.

## Claims

1. Sintered hard material body (1) with at least one marking (2) on a surface (3) of the hard material body (1), wherein the marking (2) is formed as an arrangement of a plurality of discrete information elements (4) in the form of depressions (6) in the surface (3) of the hard material body (1),
- - wherein at least some of the information elements (4) have a longest dimension (D) smaller than 500 µm in a plan view and wherein the information elements (4) form at least part of a matrix code or a bar code and wherein
- - the information elements (4) are introduced by an energy beam before a sintering step and are at least partially covered by a sintering surface (8) and wherein
- - the depressions (6) have a profile depth (t) of between 5 and 100 µm.

2. Sintered hard material body (1) according to claim 1, wherein at least some of the information elements (4) have a longest dimension (D) smaller than 250 µm in a plan view.

3. Sintered hard material body (1) according to claim 1 or 2, wherein at least some of the information elements (4) have a longest dimension (D) smaller than 130 µm in a plan view.

4. Hard material body (1) according to any one of the preceding claims, wherein the depressions (6) have a profile depth (t) between 10 and 50 µm, further preferably between 15 and 45 µm.

5. Hard material body (1) according to one of the preceding claims, wherein the marking (2) codes at least one information about a batch and/or dimension and/or composition of the hard material body (1).

6. Hard material body (1) according to any one of the preceding claims, wherein the hard material is formed from cemented carbide.

7. Hard material body (1) according to claim 6, wherein a proportion of metallic binder is between 2 wt.% and 20 wt.%.

8. Hard material body (1) according to one of the preceding claims, wherein the hard material body (1) is formed as a tool.

9. A method of producing a hard body (1) according to any one of the preceding claims comprising the steps of:
- Producing a green body (7) comprising hard material, binder and organic auxiliary,
- introducing a plurality of depressions (6) forming information elements (4) on the green body (7) by the action of an energy beam to form a marking (2) as an arrangement of a plurality of information elements (4), wherein the information elements (4) form at least part of a matrix code or a bar code and at least some of the information elements (4) have a longest dimension (D) smaller than 500 µm in a plan view,
- sintering the green body (7) to form the hard body (1), forming a sintered surface (8) which at least partially covers the information elements (4).

10. Method according to claim 9, wherein the sintering of the green body (7) is carried out as liquid phase sintering.

11. Method according to claim 9 or 10, wherein the energy beam is a laser beam.

## Revendications

1. Corps en matériau dur fritté (1) comprenant au moins un marquage (2) sur une surface (3) du corps en matériau dur (1), le marquage (2) étant conçu comme un agencement d'une pluralité d'éléments d'information discrets (4) se présentant sous la forme de creux (6) dans la surface (3) du corps en matériau dur (1),
- au moins certains des éléments d'information (4) ayant en vue de dessus une plus grande dimension (D) inférieure à 500 µm et les éléments d'information (4) formant au moins une partie d'un code matriciel ou d'un code à barres et
- les éléments d'information (4) étant ménagés à l'aide d'un faisceau d'énergie avant une étape de frittage et étant au moins partiellement recouverts par une surface frittée (8) et
- les creux (6) ayant une profondeur de profil (t) comprise entre 5 et 100 µm.

2. Corps en matériau dur fritté (1) selon la revendication 1, au moins certains des éléments d'information (4) ayant en vue de dessus une plus grande dimension (D) inférieure à 250 µm.

3. Corps en matériau dur fritté (1) selon la revendication 1 ou 2, au moins certains des éléments d'information (4) ayant en vue de dessus une plus grande dimension (D) inférieure à 130 µm.

4. Corps en matériau dur (1) selon l'une des revendications précédentes, les creux (6) ayant une profondeur de profil (t) comprise entre 10 et 50 µm, plus préférablement entre 15 et 45 µm.

5. Corps en matériau dur (1) selon l'une des revendications précédentes, le marquage (2) codant au moins une information relative à une charge et/ou une dimension et/ou à la composition du corps en matériau dur (1) .

6. Corps en matériau dur (1) selon l'une des revendications précédentes, le matériau dur étant formé de métal dur.

7. Corps en matériau dur (1) selon la revendication 6, une proportion de liant métallique étant comprise entre 2 % en poids et 20 % en poids.

8. Corps en matériau dur (1) selon l'une des revendications précédentes, le corps en matériau dur (1) étant conçu comme un outil.

9. Procédé de fabrication d'un corps en matériau dur (1) selon l'une des revendications précédentes, comprenant les étapes suivantes :
- produire un corps vert (7) comprenant de la matière dure, un liant et un adjuvant organique,
- ménager une pluralité de creux (6) formant des éléments d'information (4) sur le corps vert (7) par action d'un faisceau d'énergie afin de former un marquage (2) sous la forme d'un agencement d'une pluralité d'éléments d'information (4), les éléments d'information (4) formant au moins une partie d'un code matriciel ou d'un code à barres et au moins certains des éléments d'information (4) ayant en vue de dessus une plus grande dimension (D) inférieure à 500 µm,
- fritter le corps vert (7) pour former le corps en matériau dur (1) par formation d'une surface frittée (8) qui recouvre au moins partiellement les éléments d'information (4).

10. Procédé selon la revendication 9, le frittage du corps vert (7) étant effectué sous la forme d'un frittage en phase liquide.

11. Procédé selon la revendication 9 ou 10, le faisceau d'énergie étant un faisceau laser.
